# NEW EUROPEAN PATENT SPECIFICATION

(11) **EP 1 365 931 B2**
(45) Date of publication and mention of the opposition decision: **13.06.2007**
(45) Mention of the grant of the patent: 02.06.2004
(21) Application number: 02704900.6
(22) Date of filing: 06.03.2002
(51) Int. Cl.: B44C 5/04, B44F 1/06, B32B 17/10, B29C 39/12, A47G 1/06

(54) **A method of producing a window or mirror having a decorative pattern**
Verfahren zur Herstellung eines Fensters oder Spiegels mit einer dekorativen Sruktur
Procédé de production d'une fenêtre ou d'un miroir possédant un modèle décoratif

(30) Priority: 06.03.2001 GB 0105406
(43) Date of publication of application: 03.12.2003
(73) Proprietor: Glasslam Europe Ltd., Sittingbourne, Kent ME10 2PG (GB)
(72) Inventor: HOWES, Stephen, Pompano Beach, FL 33062 (US)
(74) Representative: Townsend, Victoria Jayne
(86) International application number: PCT/GB2002/000935
(87) International publication number: WO 2002/070284

(56) References cited:
- GB-A- 2 338 681
- US-A- 3 516 893
- US-A- 4 791 010
- US-A- 5 306 535
- US-A- 5 944 862

## Description

The present invention relates to decorative windows and mirrors and to methods of manufacturing the same. More especially, but not exclusively the invention relates to such windows and mirrors having decorative patterns which may be at least partially coloured.

Traditionally, decorative windows and mirrors have been fabricated by grinding contours into suitably dimensioned plate glass. Once contoured, the glass is polished to produce the required finish. Windows and mirrors produced in this way are relatively expensive because of the time and skilled labour employed in their manufacture. Decorative windows and mirrors have also been made as composites by adhering or otherwise securing a decorative pane or border to one or more glass sheets. The main disadvantage of windows and mirrors manufactured in this manner is again the relatively high cost incurred during manufacture.

Recent advances produced windows and mirrors that may be mass produced less expensively than traditional methods. For example, windows and mirrors with decorative designs and surfaces have been produced by injection moulding techniques using clear thermoplastic materials. However, if various sizes, shapes, and patterns of windows are desired, then such techniques become expensive due to the high cost of the tooling. Limited production runs are also cost prohibitive because a new die must be used for each of the different sizes and designs. Additionally, such windows have not met with commercial success because they do not look and feel like glass.

US-A-5306535 discloses an insert for mounting in the comer of a door or window frame opening includes two mounting flanges bonded along two edges of a glass panel. The flanges define an L-shape. Mounting within the frame is by fasteners which extend through apertures through the flanges.

US-A-3516893 discloses a decorative laminated panel having a design printed sheet of acetate fabric interposed between and adhesively bonded to a sheet of tempered glass and a backing sheet, the adhesive bonding containing an ingredient which produces at least a partial solvent effect on the acetate fabric while retaining its printed design in application to the glass.

UK Patent Application 2338681A discloses a method of producing a decorative window which overcomes many of the problems discussed above. In this process a glass master containing a decorative pattern is used to fabricate a mould with a complementary pattern. The mould is then oriented against a glass sheet having a release material facing the mould cavity. Hard casting resin is introduced into the cavity and cured. The decorative resin sheet can easily be removed from the mould and used to fabricate a window. The resin sheet can be cut to a desired size and shape. The cured decorative resin sheet is typically laminated to a glass sheet using a soft resin thus forming a decorative window. A second glass sheet may be attached to the decorative window in such a way as to house the resin sheet thus forming a window having an exterior consisting entirely of glass.

In many respects the present invention replicates the manufacturing process disclosed in GB-A-2338681. Modifications do, however, need to be made to the process disclosed particularly to ensure that the unpatterned area of the window or mirror remains at all times free of the resin which is used for producing the decorative pattern. These modifications are the subject of this invention and do provide a process by which windows and mirrors with decorative patterns can be produced relatively cheaply and with sufficient flexibility to enable a wide variety of aesthetically pleasing designs to be produced.

In one aspect, the invention provides a method of producing a window or mirror according to Claim 1.

The introduction of colours into decorative windows and mirrors has proved to be both difficult to achieve and expensive to produce. In many instances, this has previously been achieved by colouring discrete sections of the glass before or after curing, or by adhering coloured shapes to the finished window or mirror.

The areas of colour are printed by silk screening one or more coloured inks onto the glass surface.

The cast resin may be transparent. Alternatively, the resin may be tinted or coloured. Typically the resin is an acrylic.

The flexible mould may be produced by pouring a mixture of a silicons and a catalyst onto the surface of a substrate formed with a decorative design which is in the inverse of the decorative pattern to be bonded to the mirror surface and bordered by grooves which extend around the entire periphery of the decorative pattern, the mixture of silicone and catalyst being exposed to a vacuum before pouring to remove trapped air therefrom.

A release agent may be applied to the substrate surface before pouring of the silicone and catalyst mix.

A web may be placed on the surface of a first poured quantity of silicone and catalyst mix, the web being subsequently covered by a second pouring of the mix.

The method may comprise the further steps of releasing the mould from the substrate, inverting the mould, clamping to the upper surface of the mould a toughened glass sheet to which the pattern is to be bonded with the now upstanding ridge formed by the grooves of the substrate compressed to define the gasket(s) to prevent the outflow of liquid from the mould interior, casting into the mould interior liquid resin, and after curing of the resin, removing the flexible mould from the glass surface.

Means may be provided in communication with the mould interior to release any trapped air therefrom.

The liquid resin may be cured by exposing the assembly of the glass sheet and the mould to infra-red heat.

In a further aspect, the invention provides a method of producing a mirror according to Claim 10.

The flexible mould may be produced by pouring a mixture of silicone and a catalyst onto the surface of a substrate formed with a decorative design which is in the inverse of the decorative border to be bonded to the mirror surface and bordered by grooves which extend around the entire periphery of the decorative design, the mixture of silicone and catalyst being exposed to a vacuum before pouring to remove trapped air therefrom.

The invention will now be described, by way of example only, with reference to the accompanying diagrammatic drawings in which:
Figure 1 is a perspective view of a decorative window or mirror constructed in accordance with a preferred embodiment of the invention;
Figure 2 is a cross-sectional view of a master substrate from which a decorative window or mirror in accordance with the invention is produced;
Figure 3 is a cross-sectional view of a flexible mould from which replicas of the master substrate shown in Figure 2 are produced; and
Figure 4 is a section taken through apparatus by which a partially coloured resin sheet can be produced using the mould shown in Figure 3.

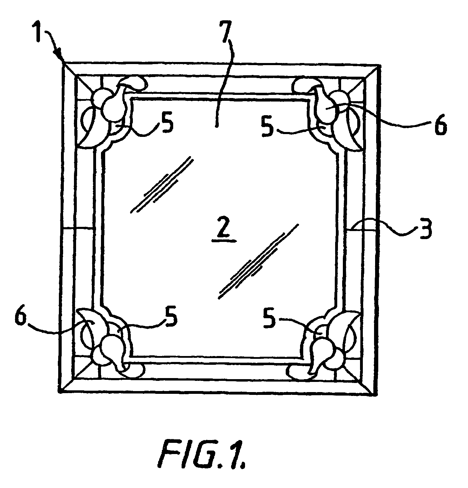

Figure 1 illustrates a decorative window or mirror 1 constructed in accordance with a preferred embodiment of the present invention. For ease of description the term "window" will be adopted in place of the expression "window or mirror". Thus, for the purposes of the following the word "mirror" is embraced by the word "window". The decorative window comprises a glass sheet 2 to which is laminated a resin sheet 3 using a suitable resin. The laminating resin is preferably a polyester resin or another adhesive such as polyvinyl butyral. The resin sheet 3 defines a decorative design 5 including coloured sections 6, and a non-decorative region 7. The exposed surface of the window may be coated with material which dries to form a relatively hardened durable surface. The coating may, for example, be a polyester, acrylic, polyurethane, urethane or silicone based material.

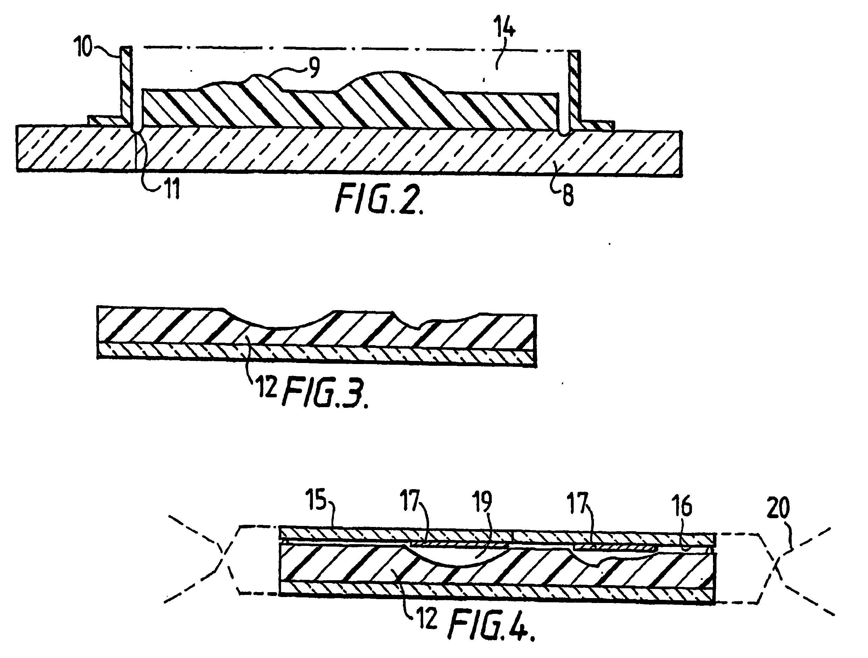

Figure 2 illustrates a master substrate 8 used to produce a flexible mould having a generally rubber-like consistency from which the resin sheet 3 is produced. The master substrate may be produced from cast acrylic or glass; other suitable materials may however be used. The surface of the master substrate 8 is formed with a decorative design 9 which corresponds to the decorative design 5 shown in Figure 1. In this preferred embodiment, parts of the design are to be coloured. Preferably, the required design is produced by use of a suitably programmed computerised numerically controlled (CNC) machine tool. The use of a CNC machine tool enables a wide variety of different designs to be produced both accurately and relatively speedily. In a preferred embodiment, the master substrate is formed to reproduce the look of a traditionally fused, stamped or kiln-formed glass. The produced glass sheet is then bonded to a ridged substrate of wood, glass or metal.

A framework 10 of plastics or like material is applied to the substrate to provide increased thickness to contain the mould during its production.

The master substrate is also formed with shallow grooves 11 which extend around the margins of the decorative design 9 of the resin sheet. These grooves extend around the entire periphery of the design. Additional grooves may be provided, these being spaced inwardly from the groove.

To prepare the master substrate for producing a mould, any untextured portions of the substrate surface are polished to a high gloss and waxed using a wax product such as a paste. One or more surfaces of the master substrate may be textured to diffuse surface inhibitions following production of the mirror. Textures may be introduced by use of, for example, self-adhesive embossed sheets or surface treatments such as acid wash and plasters. The exposed surface of the master substrate is finally polished and coated with a release agent.

To produce the flexible mould, the cavity 14 of the master substrate 8 defined between the framework 11 is filled with a mixture which typically comprises a silicone and a catalyst blended with a pre-mixed substance consisting of a light oil additive mixed with a fast curing tin catalyst. The use of a catalyst in the mixture tends to introduce large amounts of air during the curing process. Consequently small indentations may be formed in the surface of the finished mould. To overcome this problem, the mixture is exposed to a vacuum of around 25Hg for a period of time (typically five minutes) before pouring. Any trapped air is thereby removed from the mixture. Use of the release agent ensures that silicone from the mixture is not left on the surface of the master substrate when the mould is removed. Polishing of the master substrate surface ensures a clean and gloss-like finish to this mould surface.

The mixture is poured from a container to an intermediate level within the cavity 14 of the master substrate and a web or mesh is placed on the mixture surface to provide enhanced strength to the mould once it has cured. The web inhibits stretching of the mould when in use. Additional mixture is then poured over the web or mesh to the height of the framework 10 forming an upper surface. The mould 12 is placed with its flat surface against a waxed sheet of toughened or tempered glass. This is to ensure that the mould releases without sticking from the glass sheet during the production process. The glass sheet is merely a support which provides rigidity for the mould.

The profile of a produced mould 12 is shown in Figure 3. This profile includes a mirror image of the required decorative pattern 9 and protruding ridges produced by the grooves 11. These ridges act as compressible gaskets to confine subsequently cast resin to the area of the pattern 9. This resin is therefore prevented by these gaskets from flowing onto what is to be the reflective surface or surfaces of the mirror.

Figure 4 illustrates the use of the mould 12 to produce the resin sheet 3. Once removed from the master substrate 8, the mould 12 is inverted and its flat surface placed against a support member leaving the decorative side of the mould 12 facing upwards.

It is at this stage that preparations for imparting colouring to certain sections of the pattern begin. Firstly, a sheet of toughened (preferably tempered) glass 15 has printed on one of its surfaces 16 areas of colour 17 using a silk screen technique and inks compatible with the resin from which the resin sheet is to be produced. The printed or applied colours may be the same or may vary and the sizes of the areas 17 may be the same or may vary. Once printed, the surface 16 is cleaned using a specialist cleaner and then primed using an adherent chemical, for example an organosilane ester composite solution.

The sheet of toughened glass 15 is then placed on top of the mould 12 with its coloured surface(s) facing the mould to define a frame-shaped cavity 19 which is subsequently filled with a cast liquid resin which cures to a high degree of hardness to ultimately produce the resin sheet. The toughened glass sheet, mould and support member are then secured together with releasable spring loaded clamps 20.

Pigmented resin may be poured into discrete sections of the mould prior to casting of the remaining resin. This may be in addition to the colour printing, discussed above.

Alternatively, discrete sections of the mould may be colour coated prior to casting of the resin. This may be in addition to or as an alternative to the techniques discussed above.

The mould 12 is cleaned using compressed air to remove any dirt or other contaminants before it is covered by the toughened glass sheet 15. The sheet 15 is carefully aligned over the mould to ensure that the coloured areas 17 are correctly positioned over those contours of the pattern 9 which are to be coloured.

For filling, a thin tube connected to a pump is inserted between the mould and the toughened glass sheet 15 to fill the cavity with liquid resin. To avoid distortion of the mould caused by pressure applied to it by the clamps, a small opening is made through the mould wall through which the tube is inserted.

A breather tube may be inserted into the cavity through a small opening formed in the mould at a position diagonally opposite to the opening through which resin is admitted to the cavity through the filling tube. During the filling process, the clamped assembly is supported on stops whereby the assembly is inclined at an angle with the breather tube at the upper corner of the mould. This ensures that any trapped air rises and is expelled through the breather tube during the casting process.

To prevent pin pricks in the surface of the cast resin caused by a micro layer of resin not curing because of incompatibility between the adjoining surfaces of the mould and the resin, heat is applied to the assembly during the casting and curing processes.

Preferably, the resin is a clear casting resin which consists primarily of a clear base resin blended with a stabilizer. The stabilizer is necessary to prevent the hardened resin sheet from turning yellow over time. In addition, the stabilizer beneficially inhibits the transmission of ultraviolet light.

Once the cavity is filled completely with liquid resin, the assembly of the spring clamps, annealed glass sheet, mould and support member is levelled for curing.

The sealed liquid resin is cured using a heating process either by exposing the assembly to infrared heat or by using an oven process. Infrared curing typically takes between seven and ten minutes to complete. Once cured, the spring clamps and the mould are removed to reveal the toughened glass sheet to which is bonded the resin sheet having the required decorative pattern and coloured sections corresponding to those of master substrate.

The toughened sheet of glass with the bonded decorative border may then be covered by a sheet of anti-reflective glass. Typically, the sheet of anti-reflective glass is supported on spacers to define a sealed air space. The anti-reflective surface of the sheet 1 may be sputter, cathodic or spray coated to produce a reflective index to 0.5% or below. Suitable spacers include those marketed by Edgetech under the name SUPER-SPACER (™).

It will be appreciated that the foregoing is merely exemplary of decorative mirrors and methods of producing such mirrors in accordance with the invention and that modifications can readily be made thereto without departing from the true scope of the invention as set out in the appended claims.

## Claims

1. A method of producing a window or mirror (1) having a decorative pattern (5) formed by casting liquid resin into a cavity (14) defined between a toughened glass sheet (2) whose surface has applied to it an area of colour, and a flexible mould (12) which replicates the shape, dimensions and design of the required pattern, the mould (12) having one or more upstanding ridges which are positioned alongside the margin of the pattern to be formed and cooperate with the glass sheet to confine cast resin to the pattern area defined between the ridges, the coloured area of the glass surface being positioned below the area confined by the mould the coloured area being printed by screen printing one or more coloured inks onto the glass surface.

2. A method as claimed in claim 1 wherein the flexible mould is produced by pouring a mixture of a silicone and a catalyst onto the surface of a substrate formed with a decorative design which is in the inverse of the decorative pattern to be bonded to the mirror surface and bordered by grooves (11) which extend around the entire periphery of the decorative pattern, the mixture of silicone and catalyst being exposed to a vacuum before pouring to remove trapped air therefrom.

3. A method as claimed in claim 2 wherein a release agent is applied to the substrate surface before pouring of the silicone and catalyst mix.

4. A method as claimed in claim 2 or claim 3 wherein a web is placed on the surface of a first poured quantity of silicone and catalyst mix, the web being subsequently covered by a second pouring of the mix.

5. A method as claimed in any one of claims 1 to 4 further comprising the steps of releasing the mould from the substrate, inverting the mould, clamping to the upper surface of the mould a toughened glass sheet to which the pattern is to be bonded with the now upstanding ridge formed by the grooves of the substrate compressed to define the gasket(s) to prevent the outflow of liquid from the mould interior, casting into the mould interior liquid resin, and after curing of the resin, removing the flexible mould from the glass surface.

6. A method as claimed in claim 5 wherein means are provided in communication with the mould interior to release any trapped air therefrom.

7. A method as claimed in claim 5 or claim 6 wherein the liquid resin is cured by exposing the assembly of the glass sheet and the mould to infra-red heat.

8. A method as claimed in any one of the preceding claims wherein the cast resin is transparent.

9. A method as claimed in any one of claims 1 to 7 wherein the cast resin is tinted or coloured.

10. A method of producing a mirror having a decorative border (5) formed by casting liquid resin into a cavity (14) defined between an annealed glass sheet whose surface has applied to it an area of colour and a flexible mould (12) which replicates the shape, dimensions and design of the required border, the mould having one or more upstanding ridges which are positioned alongside the margin of the border to be formed and cooperate with the glass sheet to confine cast resin to the border area defined between the ridges, the flexible mould being produced by pouring a mixture of silicone and a catalyst onto the surface of a substrate formed with a decorative design which is in the inverse of the decorative border to be bonded to the mirror surface and bordered by grooves which extend around the entire periphery of the decorative design, the mixture of silicone and catalyst being exposed to a vacuum before pouring to remove trapped air therefrom the coloured area of the glass surface being positioned below the area confined by the mould and being printed by screen printing one or more coloured inks onto the glass surface.

11. A method as claimed in claim 10 wherein a release agent is applied to substrate surface before pouring of the silicone and catalyst mix.

12. A method as claimed in claim 10 or claim 11 wherein a web is placed on the surface of a first poured quantity of silicone and catalyst mix, the web being subsequently covered by a second pouring of the mix.

13. A method as claimed in any one of claims 10 to 12 further comprising the steps of releasing the mould from the substrate, inverting the mould, clamping to the upper surface of the mould an annealed glass sheet to which the border is to be bonded with the now upstanding ridge formed by the grooves of the substrate compressed to define the gasket(s) to prevent the outflow of liquid from the mould interior, casting into the mould interior liquid resin, and after curing of the resin, removing the flexible mould from the glass surface.

14. A method as claimed in claim 13 wherein means are provided in communication with the mould interior to release any trapped air therefrom.

15. A method as claimed in claim 13 or claim 14 wherein the liquid resin is cured by exposing the assembly of the glass sheet and the mould to infra-red heat.

## Patentansprüche

1. Verfahren zur Herstellung eines Fensters oder Spiegels
(1) mit einer dekorativen Struktur (5), welche durch Gießen eines flüssigen Harzes in einen zwischen einer Hartglasplatte,(2), deren Oberfläche einen auf diese aufgebrachten farbigen Bereich aufweist, und einer nachgiebigen Form (12), welche die Gestalt, die Abmessungen und das Design der gewünschten Struktur wiedergibt, gebildeten Formraum (14) geformt wird, wobei die Form (12) mit einer oder mehreren aufrechten Rippen ausgestattet ist, welche entlang des Randes der zu formenden Struktur angeordnet sind und mit der Glasplatte
(2) derart zusammenwirken, daß sie das Gießharz in dem zwischen den Rippen gebildeten Strukturbereich eingrenzen, wobei der farbige Bereich der Glasoberfläche unterhalb des von der Form (12) begrenzten Bereiches angeordnet wird, wobei der farbige Bereich durch Siebdruck einer oder mehrerer farbiger Tinten auf die Glasoberfläche aufgebracht wird.

2. Verfahren nach Anspruch 1, wobei die nachgiebige Form (12) durch Gießen einer Mischung eines Silikones und eines Katalysators auf die Oberfläche eines Substrates mit einem dekorativen Design hergestellt wird, welches bezüglich der auf der Oberfläche des Spiegels anzubringenden dekorativen Struktur komplementär und durch Nuten (11) begrenzt ist, welche sich um den gesamten Umfang der dekorativen Struktur erstrecken, wobei die Mischung aus Silikon und Katalysator vor dem Gießen einem Vakuum ausgesetzt wird, um eingeschlossene Luft auszutreiben.

3. Verfahren nach Anspruch 2, wobei vor dem Gießen der Mischung aus Silikon und Katalysator ein Trennmittel auf die Oberfläche des Substrates aufgebracht wird.

4. Verfahren nach Anspruch 2 oder 3, wobei auf der Oberfläche eines ersten Anteils der gegossenen Mischung aus Silikon und Katalysator ein Gewebe angeordnet und das Gewebe anschließend durch einen zweiten Guß der Mischung bedeckt wird.

5. Verfahren nach einem der Ansprüche 1 bis 4, welches ferner die folgenden Schritte umfaßt:
- Lösen der Form (12) von dem Substrat;
- Umkehren der Form (12);
- Festlegen einer Hartglasplatte, an welcher die Struktur angebracht werden soll, an der oberen Fläche der Form mit der nunmehr aufrechten Rippe, welche durch die Nuten des komprimierten Substrates gebildet ist, um (eine) Dichtung(en) zu bilden, so daß ein Austritt von Flüssigkeit aus dem Formraum verhindert wird;
- Gießen des flüssigen Harzes in den Formraum; und
- nach Aushärten des Harzes Entfernen der nachgiebigen Form von der Glasoberfläche.

6. Verfahren nach Anspruch 5, wobei mit dem Formraum in Verbindung stehende Mittel vorgesehen werden, um jegliche hierin eingeschlossene Luft zu entfernen.

7. Verfahren nach Anspruch 5 oder 6, wobei das flüssige Harz ausgehärtet wird, indem die Einheit aus der Glasplatte und der Form Infrarot-Strahlung ausgesetzt wird.

8. Verfahren nach einem der vorangehenden Ansprüche, wobei das Gießharz transparent ist.

9. Verfahren nach einem der Ansprüche 1 bis 7, wobei das Gießharz getönt oder gefärbt ist.

10. Verfahren zur Herstellung eines Spiegels mit einem dekorativen Rahmen (5), welcher durch Gießen eines flüssigen Harzes in einen zwischen einer geglühten Glasplatte, deren Oberfläche einen auf diese aufgebrachten farbigen Bereich aufweist, und einer nachgiebigen Form (12), welche die Gestalt, die Abmessungen und das Design des gewünschten Rahmens wiedergibt, gebildeten Formraum (14) geformt wird, wobei die Form (12) mit einer oder mehreren aufrechten Rippen ausgestattet ist, welche entlang des Randes des zu formenden Rahmens angeordnet sind und mit der Glasplatte derart zusammenwirken, daß sie das Gießharz in dem zwischen den Rippen gebildeten Rahmenbereich eingrenzen, wobei die nachgiebige Form (12) durch Gießen einer Mischung eines Silikones und eines Katalysators auf die Oberfläche eines Substrates mit einem dekorativen Design hergestellt wird, welches bezüglich dem auf der Oberfläche des Spiegels anzubringenden dekorativen Rahmen komplementär und durch Nuten begrenzt ist, welche sich um den gesamten Umfang des dekorativen Designs erstrecken, wobei die Mischung aus Silikon und Katalysator vor dem Gießen einem Vakuum ausgesetzt wird, um eingeschlossene Luft auszutreiben, wobei der farbige Bereich der Glasoberfläche unterhalb des von der Form (12) begrenzten Bereiches angeordnet und durch Siebdruck einer oder mehrerer farbiger Tinten auf die Glasoberfläche aufgebracht wird.

11. Verfahren nach Anspruch 10, wobei vor dem Gießen der Mischung aus Silikon und Katalysator ein Trennmittel auf die Oberfläche des Substrates aufgebracht wird.

12. Verfahren nach Anspruch 10 oder 11, wobei auf der Oberfläche eines ersten Anteils der gegossenen Mischung aus Silikon und Katalysator ein Gewebe angeordnet und das Gewebe anschließend durch einen zweiten Guß der Mischung bedeckt wird.

13. Verfahren nach einem der Ansprüche 10 bis 12, welches ferner die folgenden Schritte umfaßt:
- Lösen der Form (12) von dem Substrat;
- Umkehren der Form (12);
- Festlegen einer geglühten Glasplatte, an welcher der Rahmen angebracht werden soll, an der oberen Fläche der Form mit der nunmehr aufrechten Rippe, welche durch die Nuten des komprimierten Substrates gebildet ist, um (eine) Dichtung(en) zu bilden, so daß ein Austritt von Flüssigkeit aus dem Formraum verhindert wird;
- Gießen des flüssigen Harzes in den Formraum; und
- nach Aushärten des Harzes Entfernen der nachgiebigen Form von der Glasoberfläche.

14. Verfahren nach Anspruch 13, wobei mit dem Formraum in Verbindung stehende Mittel vorgesehen werden, um jegliche hierin eingeschlossene Luft zu entfernen.

15. Verfahren nach Anspruch 13 oder 14, wobei das flüssige Harz ausgehärtet wird, indem die Einheit aus der Glasplatte und der Form Infrarot-Strahlung ausgesetzt wird.

## Revendications

1. Procédé de production d'une fenêtre ou d'un miroir (1) possédant un motif décoratif (5) formé en coulant une résine liquide dans une cavité (14) définie entre une vitre trempée (2) sur la surface de laquelle est appliquée une zone de couleur et un moule flexible (12) qui reproduit la configuration, les dimensions et le dessin du motif requis, le moule (12) possédant une ou plusieurs nervures dressées qui sont disposées le long de la marge du motif à réaliser et qui coopèrent avec la vitre pour confiner la résine coulée à la zone correspondant au motif, définie entre les nervures, la zone colorée de la surface vitrée étant disposée en-dessous de la zone confinée par le moule, la zone colorée étant imprimée par sérigraphie d'une ou plusieurs encres de couleur sur la surface de verre.

2. Procédé selon la revendication 1, dans lequel on obtient le moule flexible en coulant un mélange de silicone et d'un catalyseur sur la surface d'un substrat formé avec un motif décoratif qui représente l'envers du motif décoratif qui doit être collé sur la surface du miroir, et délimitée par des rainures (11) qui s'étendent sur toute la périphérie du motif décoratif, le mélange de silicone et de catalyseur étant exposé à un vide avant le versage dans le but d'en éliminer l'air pris au piège.

3. Procédé selon la revendication 2, dans lequel on applique un agent de démoulage sur la surface du substrat avant de verser le mélange de silicone et de catalyseur.

4. Procédé selon la revendication 2 ou 3, dans lequel on place un voile sur la surface d'une première quantité versée du mélange de silicone et de catalyseur, le voile étant ensuite recouvert par un deuxième versage du mélange.

5. Procédé selon l'une quelconque des revendications 1 à 4, comprenant en outre les étapes consistant à libérer le moule du substrat, inverser le moule, serrer contre la surface supérieure du moule une vitre trempée sur laquelle le motif doit être collé, la nervure à présent dressée formée par des rainures du substrat étant comprimée pour définir le ou les joints statiques afin d'empêcher l'écoulement du liquide à l'extérieur du moule, couler une résine liquide à l'intérieur du moule et, après le durcissement de la résine, retirer le moule flexible de la surface vitrée.

6. Procédé selon la revendication 5, dans lequel on prévoit des moyens en communication avec l'intérieur du moule pour en libérer l'air qui y est pris au piège.

7. Procédé selon la revendication 5 ou 6, dans lequel la résine liquide est durcie en exposant l'assemblage de la vitre et du moule à un chauffage par infrarouge.

8. Procédé selon l'une quelconque des revendications précédentes, dans lequel la résine coulée est transparente.

9. Procédé selon l'une quelconque des revendications 1 à 7, dans lequel la résine coulée est teintée ou colorée.

10. Procédé de production d'un miroir possédant une bordure décorative (5) formée en coulant une résine liquide dans une cavité (14) définie entre une vitre soumise à un recuit sur la surface de laquelle on a appliqué une zone de couleur et un moule flexible (12) qui reproduit la configuration, les dimensions et le dessin de la bordure requise, le moule possédant une ou plusieurs nervures dressées qui sont disposées le long de la marge de la bordure à réaliser et qui coopèrent avec la vitre pour confiner la résine coulée à la zone correspondant à la bordure, définie entre les nervures, le moule flexible étant fabriqué en coulant un mélange de silicone et d'un catalyseur sur la surface d'un substrat formé avec un motif décoratif qui représente l'envers de la bordure décorative qui doit être collée sur la surface du miroir, et délimitée par des rainures (11) qui s'étendent sur toute la périphérie du motif décoratif, le mélange de silicone et de catalyseur étant exposé à un vide avant le versage dans le but d'en éliminer l'air pris au piège, la zone colorée de la surface du verre étant disposée en-dessous de la zone confinée par le moule et étant imprimée par sérigraphie d'un ou plusieurs encres colorées sur la surface de verre.

11. Procédé selon la revendication 10, dans lequel on applique un agent de démoulage sur la surface du substrat avant de verser le mélange de silicone et de catalyseur.

12. Procédé selon la revendication 10 ou 11, dans lequel on place un voile sur la surface d'une première quantité versée du mélange de silicone et de catalyseur, le voile étant ensuite recouvert par un deuxième versage du mélange.

13. Procédé selon l'une quelconque des revendications 10 à 12, comprenant en outre les étapes consistant à libérer le moule du substrat, inverser le moule, serrer contre la surface supérieure du moule une vitre soumise à un recuit sur laquelle la bordure doit être collée, la nervure à présent dressée formée par des rainures du substrat étant comprimée pour définir le ou les joints statiques afin d'empêcher l'écoulement du liquide à l'extérieur du moule, couler une résine liquide à l'intérieur du moule et, après le durcissement de la résine, retirer le moule flexible de la surface vitrée.

14. Procédé selon la revendication 13, dans lequel on prévoit des moyens en communication avec l'intérieur du moule pour en libérer l'air qui y est pris au piège.

15. Procédé selon la revendication 13 ou 14, dans lequel la résine liquide est durcie en exposant l'assemblage de la vitre et du moule à un chauffage par infrarouge.
